# EUROPEAN PATENT APPLICATION

(11) **EP 2 747 505 A1**
(43) Date of publication of application: **25.06.2014**
(21) Application number: 12306620.1
(22) Date of filing: 19.12.2012
(51) Int. Cl.: H04W 72/08, H04W 84/18

(54) **Clustering of wireless sensor networks based on hidden node detection**

(71) Applicant: Alcatel Lucent, 75007 Paris (FR)
(72) Inventor: Lin, Chih-Kuang, Dublin, 15 (IE); Mullany, Francis, Dublin, 15 (IE)
(74) Representative: Leppard, Andrew John

(57) **Abstract**

In an adaptive cluster forming and scheduling method for ad-hoc networks (802.15.4, Zigbee), dependent on received energy level and the detected periods of high and low energy levels, above or below a threshold, it is determined whether a normal traffic situation, a traffic overload situation or a hidden node situation exists. Packet transmission failure is a further criteria for the scheduling method. The clusters consists only of one-hop neighbours.

The method comprises: collating measured changes in energy levels received over a transmission channel of a wireless telecommunications network; and determining a current condition of the transmission channel by establishing a conformance of the measured changes with expected changes in energy levels when operating under at least one condition. By collating the actual measured changes in energy levels, an accurate, dynamic indication of the energy levels being experienced on the transmission channel can be determined. Also, by correlating the measured changes of the transmission channel when operating in accordance with a particular condition, the conformance or not of the channel with that condition can be determined in order to provide an accurate indication of the current condition of the transmission channel. This avoids having to rely on historic information which may only be relevant to the condition of the channel at previous points in time or having to rely on empirical information which may not be of sufficiently fine granularity either quantitatively or temporally to enable a detailed assessment of the current condition of the transmission channel to be determined. Also, by measuring changes in energy levels, the cause of any non-conformance with a particular operating condition may be derivable, which may not be possible with other indicators.

## Description

### FIELD OF THE INVENTION

The present invention relates to a method, a network node and a computer program product.

### BACKGROUND

Wireless communication networks are known. In such wireless communication networks, network nodes are provided which communicate wirelessly with each other over transmission channels. In some wireless communication networks, transmission channels may be shared by network nodes. Various protocols exist to enable communication between network nodes to occur efficiently.

Although existing approaches facilitate the operation of wireless communication networks, they each have their own shortcomings. Accordingly, it is desired to provide an improved technique for a wireless communications network.

### SUMMARY

According to a first aspect, there is provided a network node method, comprising: collating measured changes in energy levels received over a transmission channel of a wireless telecommunications network; and determining a current condition of the transmission channel by establishing a conformance of the measured changes with expected changes in energy levels when operating under at least one condition.

The first aspect recognises that a problem with existing techniques is their inability to provide accurate transmission channel condition information for use when determining how to arrange the transmission of data over a transmission channel between network nodes. Although existing techniques provide some information on the condition of a transmission channel this can be at the expense of considerable control message overhead to determine this condition, or can cause performance problems when the network node is constrained in terms of energy or bandwidth resources, or can be inaccurate where considerable dynamic changes in traffic are being experienced. Also, the first aspect recognises that some existing techniques fail to provide accurate information on the current condition of a transmission channel and instead rely on estimation metrics which are dependent on historic information such as using a packet reception rate. The problem with techniques such as a packet reception rate is that the packet reception rate calculation requires several packets and so tends to capture long term variations instead of short term temporal changes. The first aspect recognises that a wireless transmission channel is often characterised by its short-term temporal dynamic changes and so it is challenging to use the packet rate reception rate to estimate the current condition of the transmission channel. Also, many network nodes utilise long data packet intervals which increases the convergence time of the packet reception rate. In addition, the first aspect recognises that a problem with a packet reception rate is its lack of prediction regarding the current condition of the channel because the short-term temporal dynamic changes of a wireless transmission channel often creates variations between the last link status or condition and the current link status or condition. The first aspect recognises that other metrics which are hardware-based such as a received signal strength indicator or a link quality indicator only provides empirical information which is difficult to correlate with current conditions under dynamic network conditions.

Accordingly, a method is provided. The method may comprise the step of collating or recording measured changes in the energy or signal power levels of transmission received over a transmission channel of a wireless telecommunications network. The method may also comprise the step of determining a current condition or state of the transmission channel by establishing a conformance or a correlation between the measured changes and expected or defined changes in energy levels of the transmission channel when that transmission channel operates under or in accordance with a particular operating condition. By collating the actual measured changes in energy levels, an accurate, dynamic indication of the energy levels being experienced on the transmission channel can be determined. Also, by correlating the measured changes of the transmission channel when operating in accordance with a particular condition, the conformance or not of the channel with that condition can be determined in order to provide an accurate indication of the current condition of the transmission channel. This avoids having to rely on historic information which may only be relevant to the condition of the channel at previous points in time or having to rely on empirical information which may not be of sufficiently fine granularity either quantitatively or temporally to enable a detailed assessment of the current condition of the transmission channel to be determined. Also, by measuring changes in energy levels, the cause of any non-conformance with a particular operating condition may be derivable, which may not be possible with other indicators.

In one embodiment, the expected changes in energy levels are defined by expected boundaries within which the energy levels received over the transmission channel are expected to remain when operating under a normal condition. By defining the expected changes in energy levels, which may be both defined in time and amplitude, the expected changes can be defined accurately for any particular operating condition. Defining the expected changes in this way enables deviations from these expected changes to be easily determined with minimal resources. Although in this example the expected changes are defined in relation to the operation of the transmission channel in accordance with a normal operating condition such as, for example, an ideal operating condition for the transmission channel, it will be appreciated that the expected changes could be defined for any other condition such as non-ideal operating conditions and that the expected changes may be defined for a plurality of such conditions.

In one embodiment, the expected changes in energy levels are defined by an expected time interval boundary between transmissions over the transmission channel and the step of determining comprises: determining that the transmission channel is operating under a congested condition when the measured changes indicate that transmissions occur at intervals which are within the expected time interval boundary between transmissions. Accordingly, an interval or period of time between transmissions occurring over the transmission channel may be defined. The time interval between transmissions over the channel may represent an ideal time interval when the transmission channel is likely to be operating under its normal, ideal or most efficient conditions. It may be determined that the transmission channel is not operating under these normal or ideal conditions and is in fact congested when the transmissions over the transmission channel occur at intervals or time periods that are smaller than the expected time interval between transmissions. It will be appreciated that determining the time interval between transmissions is not something that is readily derivable from either a received signal strength indicator, a link quality indicator or a packet reception rate. Hence, it can be seen that as well as determining a condition of the channel, a cause of that condition can be indicated.

In one embodiment, the step of determining comprises: determining that the transmission channel is operating under the congested condition when an average of the measured changes indicate that transmissions occur at intervals which are within the expected time interval boundary between transmissions. Accordingly, rather than determining the time interval on a per-transmission by per-transmission basis, it is also possible to determine an average time interval between transmissions in order to provide an indication of the condition with a smaller rate of fluctuation.

In one embodiment, the congested condition has a congestion magnitude and the congestion magnitude increases as the intervals which are within the expected time interval boundary between transmissions decrease. Accordingly, an indication of the degree of congestion may be derived which may be utilised subsequently. The degree of magnitude of congestion may be proportional to the time interval between transmissions. That is to say that a higher congestion magnitude is experienced when there is a shorter time interval between transmissions compared to a lower congestion magnitude for a larger time period between transmissions.

In one embodiment, the expected changes in energy levels are defined by an expected transmission time period for each transmission and the step of determining comprises: determining that the transmission channel is operating under a hidden node collision condition when the measured changes indicate that transmissions occur for a transmission period which exceeds the expected transmission time period. Accordingly, the expected changes may be defined by an expected or nominal time period for each transmission. It may be determined that the transmission channel is experiencing a collision condition when the measured changes indicate that transmissions are occurring for a transmission time period which exceeds the expected transmission time period. This would be because the measured changes will be a result of two or more transmissions occurring which overlap and cause the energy measured to appear like a transmission which has occurred for a period of time which is longer than the expected transmission time period. Hence, it can be seen that as well as determining a condition of the channel, a cause of that condition can be indicated.

In one embodiment, wherein the step of determining comprises: determining that the transmission channel is operating under the hidden node collision condition when an average of the measured changes indicates that transmissions occur for a transmission period which exceeds the expected transmission time period. Again, by measuring the average transmission time period, rapid fluctuations in the determined channel condition can be avoided.

In one embodiment, the hidden node collision condition has a collision magnitude and the collision magnitude increases as the transmission period increases. Hence, the degree or magnitude of collision can be determined. The degree of collision may be proportionate to the transmission period of transmissions. This can help to indicate the degree of collisions that are being experienced. For example, a collision magnitude which is higher than another collision magnitude may indicate that a greater number of hidden nodes are present in the network which may be contributing to the occurrence of such collisions.

In one embodiment, the average is a window mean with exponentially weighted moving average. It will be appreciated that a window mean with exponentially weighted moving average is an estimation technique which uses few resources for processing and storage compared to estimation techniques such as linear regression or Kalman filtering.

In one embodiment, the method comprises: determining that transmissions occur when the measured energy exceeds an idle threshold. Accordingly, it is relatively simple to determine that a transmission has occurred because it can be assumed that transmission when the measured energy or power exceeds an idle threshold. Such an idle threshold may be calibrated prior to deployment within the wireless network or may be recalibrated dynamically in the field.

In one embodiment, the method comprises: generating a predicted packet reception rate from the measured changes in energy levels measured at a physical layer. Accordingly, the measured energy changes can be utilised to determine at the physical layer a predicted packet reception rate. For example, the predicted packet reception rate may indicate the number of continuously peak transmission periods divided by the total amount of transmission packets, both of which may be readily determined.

In one embodiment, the method comprises: adjusting the expected changes in energy levels based on a difference between the predicted packet reception rate and a packet reception rate reported from layer higher than the physical layer. Accordingly, a correlation between the predicted packet reception rate and an actual packet reception rate reported from, for example, a protocol layer higher than the physical layer may be determined. This deviation may be used to adjust or calibrate the expected changes in energy levels.

In one embodiment, the method comprises: controlling clustering of network nodes of the wireless telecommunications network utilising the transmission channel based on the current condition. Accordingly, the clustering of network nodes within the wireless telecommunication network may be controlled in response to the current condition of the transmission channel. This can help to ensure that the clustering arrangement of network nodes is appropriate for the current condition of the transmission channel.

This enables the clustering arrangement to be selected or adapted to be most appropriate to that current condition to, for example, maximise the efficiency or performance of the wireless telecommunications network as a whole.

In one embodiment, the step of controlling comprises: forming a flexible cluster of the network nodes in which the traffic rate available to the network nodes is restricted to lower than a rate supportable by the transmission channel when it is determined that the transmission channel is operating under the traffic congested condition. Accordingly, when it is determined that the transmission channel is congested then a flexible or first cluster may be formed or maintained but the traffic or transmission rate may be reduced or restricted in order to reduce congestion on the transmission channel.

In one embodiment, the step of controlling comprises: forming strict clusters of the network nodes when it is determined that the transmission channel is operating under the hidden node collision condition, the strict clusters being formed by causing allocation of each network node to at least one of a plurality of clusters of network nodes, each cluster of network nodes comprising only those network nodes which detect transmissions from every network node within that cluster and in which transmissions by network nodes within each of the plurality of clusters are scheduled to be performed using resources of a transmission separation scheme allocated to be shared by network nodes within that cluster of network nodes. Accordingly, the strict or second clusters of network nodes are formed when it is detected that the transmission channel is experiencing collisions. The strict or second clusters are arrangements of clusters where each network node within the cluster is able to detect transmissions from every network node within that cluster, hence each individual strict or second cluster has no hidden network nodes. The transmissions of each node within a strict or second cluster can be detected by all nodes within that cluster to prevent collisions occurring within that cluster. Also, each strict or second cluster is constrained to only transmit when permitted in accordance with the transmission separation scheme in order to prevent different strict or second clusters from attempting to transmit using the same resources. In this way, the detection of a collision condition can be used to reconfigure the arrangement of the network nodes to help remove such collisions from occurring.

In one embodiment, the step of controlling comprises: forming a flexible cluster of the network nodes in which the traffic rate available to the network nodes is the rate supportable by the transmission channel when it is determined that the transmission channel is operating under the normal condition. Accordingly, when the channel is operating in a normal or ideal condition, the traffic rate is restored to the default traffic rate which is supportable by the transmission channel.

In one embodiment, the step of controlling comprises: controlling switching between clustering based on a K nearest neighbours search algorithm in which a successful packet delivery using the transmission channel causes a linear increase in K, with an unsuccessful packet delivery using the transmission channel causing an exponential decrease in K. In order to prevent rapid fluctuations in the configuration and reconfiguration of the clustering arrangements, an algorithm is utilised which tends to favour switching to the strict clustering arrangement when packet delivery is unsuccessful and which resists switching back to a flexible cluster arrangement even when a successful packet delivery occurs.

In one embodiment, controlling switching occurs in response to both the KNN-based packet reception rate metric and the noise behaviour analysis. The nodes switch between a flexible schedule cluster and a strict schedule cluster according to the link condition.

In one embodiment, the wireless telecommunications network comprises a mesh network and the method comprising: controlling transmission of data between nodes of the mesh network based on the current condition. Accordingly, the traffic channel condition can also be utilised within a mesh network. The condition may be used to inform decisions on transmission between network nodes of such a mesh network. This enables a mesh network to rapidly respond to changes in channel conditions.

In one embodiment, the step of controlling transmission of data comprises: estimating a link quality for the current condition using the measured changes in energy levels for use in routing decisions between nodes. Accordingly, the current condition may be utilised to estimate a link quality for transmission channels between network nodes. Deriving the link quality from the current condition provides a more accurate and up to date indication of the link quality using minimal resources. This improved link quality can then be utilised in conventional algorithms used in routing decisions between nodes to improve routing.

According to a second aspect, there is provided a computer program product operable, when executed on a computer, to perform the method steps of the first aspect.

According to a third aspect, there is provided a network node for a wireless telecommunications network, comprising: collation logic operable to collate measured changes in energy levels received over a transmission channel of a wireless telecommunications network; and determining logic operable to determine a current condition of the transmission channel by establishing a conformance of the measured changes with expected changes in energy levels when operating under at least one condition.

In one embodiment, the expected changes in energy levels are defined by expected boundaries within which the energy levels received over the transmission channel are expected to remain when operating under a normal condition.

In one embodiment, the expected changes in energy levels are defined by an expected time interval boundary between transmissions over the transmission channel and the determining logic is operable to determine that the transmission channel is operating under a congested condition when the measured changes indicate that transmissions occur at intervals which are within the expected time interval boundary between transmissions.

In one embodiment, the determining logic is operable to determine that the transmission channel is operating under the congested condition when an average of the measured changes indicate that transmissions occur at intervals which are within the expected time interval boundary between transmissions.

In one embodiment, the congested condition has a congestion magnitude and the congestion magnitude increases as the intervals which are within the expected time interval boundary between transmissions decrease.

In one embodiment, the expected changes in energy levels are defined by an expected transmission time period for each transmission and the determining logic is operable to determine that the transmission channel is operating under a hidden node collision condition when the measured changes indicate that transmissions occur for a transmission period which exceeds the expected transmission time period.

In one embodiment, the determining logic is operable to determine that the transmission channel is operating under the hidden node collision condition when an average of the measured changes indicate that transmissions occur for a transmission period which exceeds the expected transmission time period.

In one embodiment, the hidden node collision condition has a collision magnitude and the collision magnitude increases as the transmission period increases.

In one embodiment, the average is a window mean with exponentially weighted moving average.

In one embodiment, the determining logic is operable to determine that transmissions occur when the measured energy exceeds an idle threshold.

In one embodiment, the determining logic is operable generate a predicted packet reception rate from the measured changes in energy levels measured at a physical layer.

In one embodiment, the determining logic is operable to adjust the expected changes in energy levels based on a difference between the predicted packet reception rate and a packet reception rate reported from layer higher than the physical layer.

In one embodiment, the determining logic is operable to control clustering of network nodes of the wireless telecommunications network utilising the transmission channel based on the current condition.

In one embodiment, the determining logic is operable to control clustering by forming a flexible cluster of the network nodes in which the traffic rate available to the network nodes is restricted to lower than a rate supportable by the transmission channel when it is determined that the transmission channel is operating under the traffic congested condition.

In one embodiment, the determining logic is operable to control clustering by forming strict clusters of the network nodes when it is determined that the transmission channel is operating under the hidden node collision condition, the strict clusters being formed by causing allocation of each network node to at least one of a plurality of clusters of network nodes, each cluster of network nodes comprising only those network nodes which detect transmissions from every network node within that cluster and in which transmissions by network nodes within each of the plurality of clusters are scheduled to be performed using resources of a transmission separation scheme allocated to be shared by network nodes within that cluster of network nodes.

In one embodiment, the determining logic is operable to control clustering by forming a flexible cluster of the network nodes in which the traffic rate available to the network nodes is the rate supportable by the transmission channel when it is determined that the transmission channel is operating under the normal condition.

In one embodiment, the determining logic is operable to control clustering by controlling switching between clustering based on a K nearest neighbours search algorithm in which a successful packet delivery using the transmission channel causes a linear increase in K, with an unsuccessful packet delivery using the transmission channel causing an exponential decrease in K.

In one embodiment, wireless telecommunications network comprises a mesh network and the network node comprises: controlling logic operable to transmission of data between nodes of the mesh network based on the current condition.

In one embodiment, the controlling logic is operable to transmission of data by estimating a link quality for the current condition using the measured changes in energy levels for use in routing decisions between nodes.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a noise behaviour analysis procedure according to one embodiment;
Figure 2 illustrates a threshold Eth for a transmission channel;
Figure 3A to 3C illustrate changing energy levels of a transmission channel;
Figure 4 illustrates experimental results showing the measured characteristics of a radio channel under different conditions;
Figure 5 illustrates cluster formation and cluster-scheduling;
Figure 6 illustrates cluster formation and cluster-scheduling;
Figure 7 illustrates a performance comparison;
Figure 8 illustrates cluster schedule comparison;
Figure 9 illustrates a wireless network;
Figure 10 illustrates a mesh network; and
Figure 11 illustrates the hidden terminal problem.

### DESCRIPTION OF THE EMBODIMENTS

### Overview

Before discussing embodiments in any more detail, first an overview will be provided. Wireless networks and, in particular, contention-based wireless networks or mesh networks, face congestion and interference problems such as, for example, co-channel interference caused by a hidden terminals transmission. Ameliorating these effects is difficult particularly when using resource-constrained wireless devices such as sensors, radio frequency identification (RFID) tags and the like. Accordingly, embodiments seek to minimise such difficulties whilst maximising bandwidth efficiency. Although some approaches already exist, these introduce their own difficulties such as introducing considerable control message overhead for setting up data traffic, high utilisation of hardware resources (which is difficult where there is limited energy and bandwidth resources) and robustness against dynamic traffic variations. Embodiments seek to ameliorate these difficulties whilst also improving the transmission reliability and bandwidth efficiency of the nodes of the wireless telecommunications network. In addition, the approach of embodiments facilitates network operation by, for example, facilitating scheduling-based channel access methods to manage dynamic traffic and result in efficient bandwidth utilisation, or improving packet delivery by providing a more effective route selection process by improving the link quality estimation.

Accordingly, embodiments provide an improved link quality estimation method for wireless networks. This approach provides improvements in at least two different ways. First, an improved link estimation metric is provided. Existing link estimation metrics are typically cost-based (in terms of resource or overhead) and dependent on the packet reception rate reported by a link layer. However, these approaches have a number of drawbacks. First, the packet reception rate calculation requires several packets to be received and tends to capture long-term quality variations instead of short-term temporal changes. Given that wireless channels are often characterised by their short-term temporal dynamic changes, it is challenging to use the packet reception rate to estimate a link quality as the link estimation metric. In addition, many sensor applications create long data packet intervals, which increase the convergence time for determining a packet reception rate. The second difficulty with the packet reception rate is its lack of prediction of the current link quality due to the short temporal dynamic changes of wireless channels which often create variations between the last link status and the current link status. Other existing link estimation metrics are hardware-based, such as a received signal strength indicator and a link quality indicator for a received packet. A difficulty with using these indicators is that it is challenging to find a well-defined correlation between the physical layer information and the packet reception rate under dynamic network conditions since this requires considerable samples and hardware calibration.

In contrast, embodiments provide a link quality estimation technique which can be easily integrated with a hybrid channel access method or with routing protocols to improve the transmission efficiency or packet delivery of wireless networks respectively. This approach, when utilised with a hybrid channel access protocol, not only improves the transmission and bandwidth efficiency, but also provides for efficient link quality prediction, the capture of short temporal dynamic changes of links and the avoidance of network reconfiguration changes causing a ping-pong effect which results in network instability. Although previous techniques enable path selection and routing using a packet reception rate metric in a wireless mesh network, these approaches have also been limited by the packet reception rate's own constraints.

Embodiments estimate link quality by establishing changes in energy or power levels received over a transmission channel under different operating conditions. For example, changes in energy levels may be defined when operating under one or more of normal or ideal conditions, congested conditions and transmission collision conditions. It will be appreciated that other conditions may well also be defined. The actual changes in energy levels received over a transmission channel can then be recorded or collated. It will be appreciated that this may be provided near-instantaneously from physical layer measurements. The current condition of the transmission channel may then be estimated by analysing the correlation between the measured changes and the expected changes under different operating conditions. This provides a convenient technique for determining the near-instantaneous condition of a transmission channel, which can be performed quickly without introducing the requirement for use of high amounts of any limited resources. In particular, such an approach introduces no additional overhead or use of the bandwidth of the transmission channel in order to accurately determine the current condition of the transmission channel. In addition, the condition determination can respond rapidly to short, temporal dynamic changes of the transmission channel. This condition information can indicate the condition of the channel from which a reason for the current channel condition can be derived. This can then be used to improve the overall efficiency of the wireless network by making appropriate configuration changes based on the current condition of a transmission channel, as will be mentioned in more detail below.

In particular, a link quality metric is utilised which helps any wireless node to predict its radio channel condition to enable an efficient decision on data packet transmissions to be made. For example, a sink node (such as a receiver) may use the link quality metric to evaluate a current channel condition and then tune a channel resource to improve transmission efficiency. Similarly, an intermediate node (such as a forwarder) can use the same link quality metric when making a packet-forwarding decision in either a hop-by-hop or end-to-end route selection. The link quality metric is used to make a swift and accurate link quality prediction with minimal cost given the short temporal dynamics of wireless channels. The link quality prediction is typically based on the link quality metric and an efficient prediction process to estimate the channel condition.

### Link Quality Metric

The link quality metric is derived from the noise behaviour analysis of a radio or transmission channel. In particular, the background noise fluctuation (such as a transmission channel's energy or power change) is utilised to identify the link condition. Unlike previous approaches, this approach introduces no packet probe (which provides overhead cost savings), uses a shorter sample duration than that required for the packet reception rate, causes smaller variations than a link quality indicator, provides higher accuracy than a received signal strength indicator and has less dependency on the reception of data packets. The measured characteristics of the channel's energy change is used to predict a link quality. Wireless communication often experiences dynamic and unreliable wireless links and so it is necessary to understand the current link condition before performing transmissions in order to avoid packet delivery failures.

### Collection and Analysis

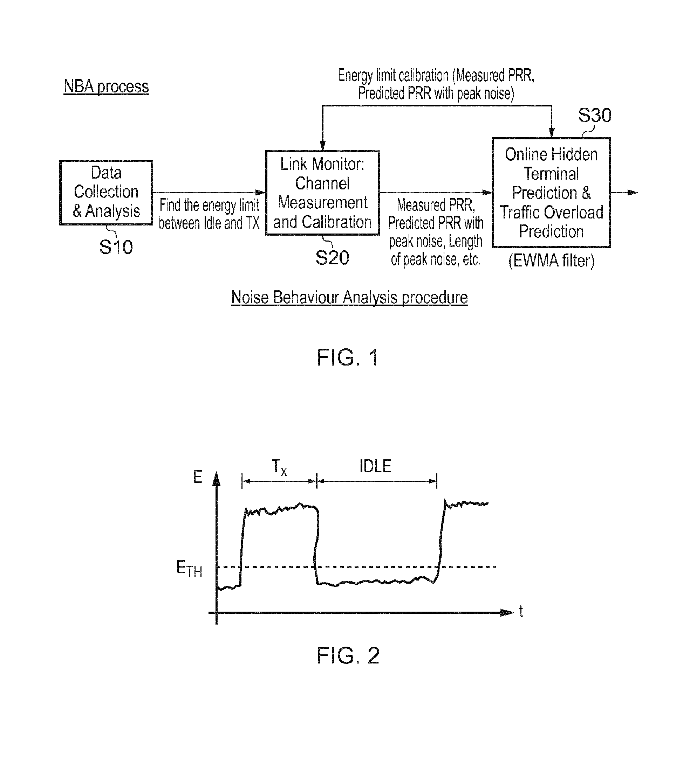

Figure 1 illustrates the noise behaviour analysis procedure for measuring and utilising changes in energy received over a transmission channel.

At step S10, link quality data collection is performed. During this step the transmission channel is monitored and changes in energy levels received over the transmission channel are recorded. This collection and analysis procedure may take place either in the field or under simulated conditions. Based on the data collected, a determination is made of the amount of data to be collected in the measurement and calibration step shown at step S20. In addition, an energy threshold is determined between the channel being idle (with no transmissions occurring in the channel) and the channel being busy (when transmissions occur over the channel). Accordingly, a threshold Eₜₕ is set, below which it is assumed that no transmissions are occurring over the transmission channel and above which it is assumed that transmissions are occurring, as shown in Figure 2.

### Channel Measurement and Calibration

At step S20, channel measurement and calibration occurs. The channel measurement process generates various link statistics such as transmission reliability, the energy intensity of the channel, temporal features of the channel, etc. which result in parameters used in the link quality prediction.

A predicted packet reception rate is the successful packet reception rate derived from measured peak transmission occurrences in the physical layer. The peak transmission is determined by the energy threshold Eₜₕ mentioned above. By observing the instances that the measured energy exceeds the energy threshold, it is possible to predict a packet reception rate. This predicted packet reception rate can be compared against an actual or measured packet reception rate which is derived in the link layer based on actual successful packet reception. A close correlation between the predicted packet reception rate predicted from energy measurement made in the physical layer and from the measured packet reception rate reported by the link layer indicates that the information being generated during the noise behaviour analysis procedure is closely representative of the actual channel conditions being experienced.

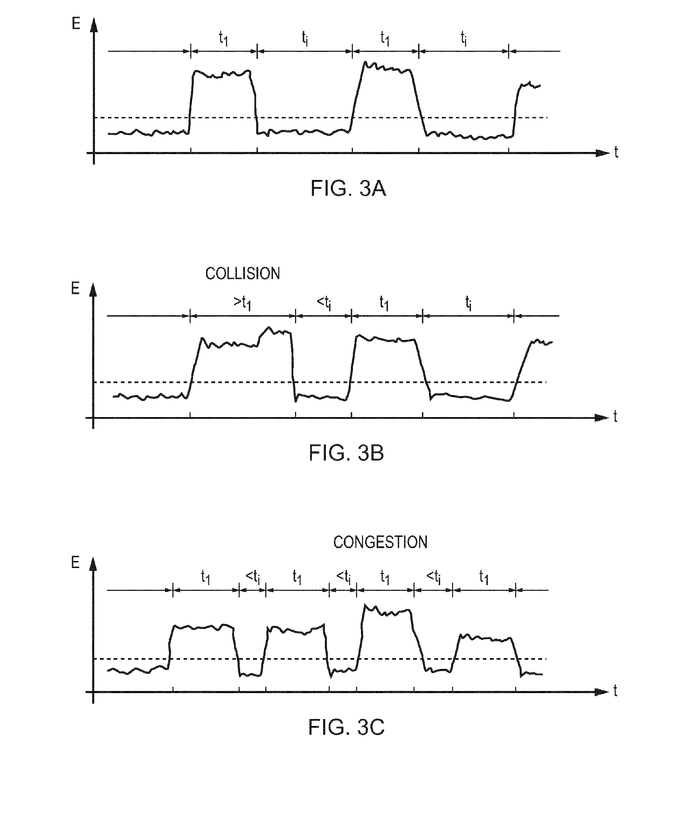

Further information can also be derived from the energy levels received over the transmission channel. For example, the average length of peak transmissions ti indicates the average amount of time occupied by continuous peak transmission periods. Likewise, the average interval ti between such peak transmissions indicates the rate of peak transmission periods as shown in Figure 3A.

In order to determine the current condition of the transmission channel, various parameters are stored which represent typical changes in energy levels under different operating conditions. For example, parameters representing the length of peak transmissions and the interval between transmissions under different operating conditions of the transmission channel may be stored and referenced against the measured changes in energy levels in order to determine the current state of the transmission channel. These parameters may be stored as boundaries representing a range of values within which the changes in energy levels may occur for any particular operating condition.

For example, if a particular average length of transmissions t₁ is expected in a normal condition and the observed average length is longer than this, then this may indicate that co-channel interference from hidden terminals is occurring since such hidden terminal collisions create overlapping packets which result in longer than expected observed average length of peak transmissions, as shown in Figure 3B. Likewise, the average interval ti between such peak transmissions may indicate the level of data traffic intensity or congestion and indicates potential communication degradation due to a constraint on the radio resources, as shown in Figure 3C. Hence, the degree of correlation between different the observed or measured changing energy levels and stored parameters representing changes in energy levels under different operating conditions may be determined to provide an indication of the current operating condition of the transmission channel. In addition to providing an indication of the current operating condition, an indication of the degree of that condition may also be provided. For example, the degree of congestion or collision may be provided.

This information can be utilised to indicate different aspects of a radio channel, which may be used to recognise different reasons for packet loss and to improve the reliability of the channel measurement and calibration process. For example, for a hybrid channel access technique, it is possible to classify packet loss into two categories. The first is packet loss due to the contention-access limitations (clear channel assessment failure and false idle detection in clear channel assessment) and packet loss due to hidden terminals. The packet loss due to the contention-access limitation is related to the average interval between peak transmissions (traffic intensity or congestion), whilst the packet loss due to the hidden terminal problem is related to the average length of peak transmissions (overlapping transmissions). Unlike in existing approaches, it is possible to use this additional information about the current channel state or condition to enable ameliorative actions to be taken to improve the efficiency of transmissions. For example, it is possible to minimise traffic intensity or congestion by reducing the amount of traffic that network nodes are permitted to produce with an adaptive communication approach, and to reduce hidden terminal collisions by introducing a strict scheduling approach, as will be explained in more detail below.

During the calibration process, the reliability of the channel measurement is maintained. In a stationary wireless network, the channel energy variation between a pair of communicating nodes is small. If a wireless network is dynamic (due to, for example, node mobility, environmental changes, etc.) the instant channel energy variation will be larger and may affect the reliability of the channel measurements. To minimise such effects, the calibration process seeks to ensure that the channel measurement results are collected when the channel measurement set-up is valid. Justification that the channel measurement set-up is valid can be performed by ensuring that a close match occurs between the measured packet reception rate and the predicted packet reception rate. The smaller the deviation ratio between the two rates is, the more reliable the channel measurement result is likely to be.

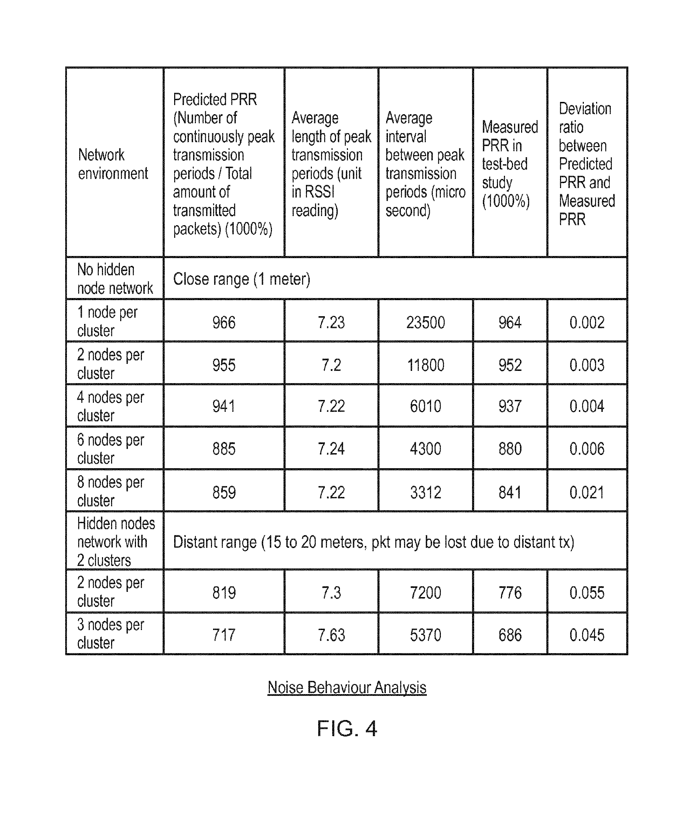

Figure 4 illustrates experimental results showing the measured characteristics of a radio channel under different conditions.

### Online Prediction

In order to predict hidden terminal collisions and/or traffic overload, a receiver-initiated online link quality prediction module is utilised at step S30 to improve control stability by calculating the short temporal link quality using a Window Mean with Exponentially Weighted Moving Average (WM-EWMA) (Windowₘₑₐₙ, Weight_{history}) estimation technique. This technique is utilised due to its lower resource consumption in processing and storage when compared with other estimation techniques such as linear regression or Kalman filtering. As mentioned above, resource constraints are an important limitation in such wireless communication network nodes.

Once indication of the current condition and the degree of traffic congestion and/ or the occurrence of hidden terminal conditions (if appropriate) has been determined from the noise behaviour analysis procedure, this information can then be utilised by different wireless network architectures to improve the efficiency of transmissions, as will now be described in more detail.

### Deployment in a Hybrid Channel Access Arrangement

Considering now the integration of the link quality estimation process noise behaviour analysis and a hybrid channel access method. The hybrid channel access method is developed on top of an IEEE 802.15.4 wireless sensor network with a centralized data sink, Sensor Gateway (SG) and utilises so-called strict and flexible cluster arrangements as described in C-k Lin, T, Kokkinos, and F. Mullany, "Extended-range Wireless Sensor Networks with Enhanced IEEE 802.15.4 CSMA/CA," Proc. IEEE Sensors Conf. , Limerick, 2011.

In the flexible cluster arrangement, any sensor is able to attempt to transmit data opportunistically in accordance with a Carrier Sense Multiple Access/ Collision Avoidance scheme. However, this approach can suffer from hidden nodes where particular sensors are unable to sense each other and their respective transmission collide at a receiver, which can make the transmissions impossible to decode.

In a strict cluster arrangement, data delivery between every sensor and the SG follows a one-hop communication paradigm. The cooperative communication among different sensors is the cornerstone of this approach. It enables any node and its one-hop neighbours to form a fully connected local cluster. In this way, every node in the strict cluster overhears the existence and communication of other members in that cluster. Consequently, no node is hidden within this cluster. Hidden nodes outside the cluster however are possible. To avoid that, there is scheduling-based coordination among different strict clusters via the SG, resulting in the temporal separations between transmissions of hidden nodes of the different clusters. As a result, the transmission collisions and resource wastes contributed by the hidden terminal problem are alleviated so the transmission efficiency of the wireless sensor network is improved. Besides, this approach is compatible with the IEEE 802.15.4 standard and it maintains a low-complexity, fair-access and low-overhead communication protocol.

The cooperative communication procedures are classified into two phases, cluster formation and cluster scheduling, and makes a static decision on each phase depending on network conditions.

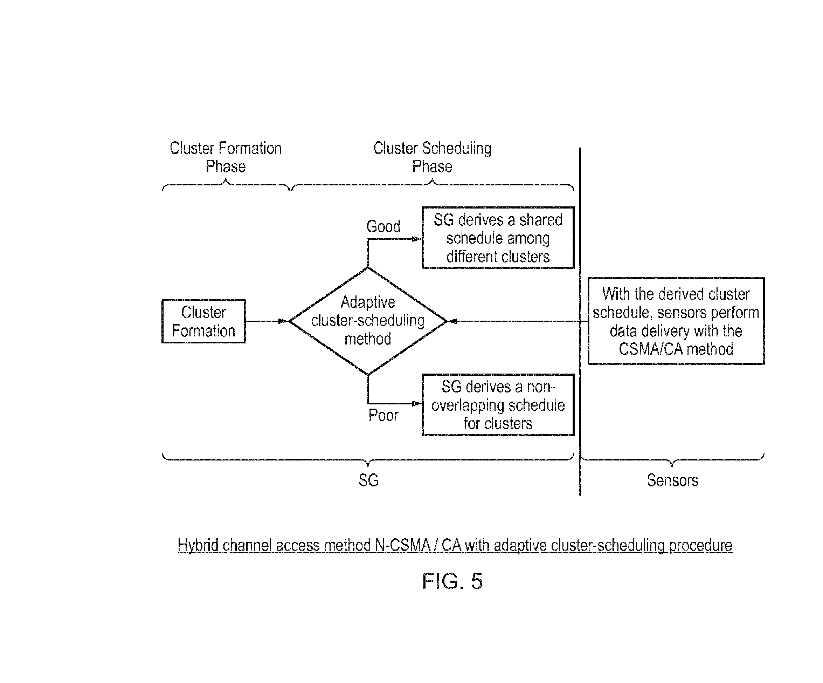

As shown in Figure 5, in the cluster formation phase, a sensor network is configured to run either flexible (distributed) or strict (centralized) cluster formation procedures, depending on network environment. Either way presents different system assumptions and different characteristics. Their common objective is to create the high-level frame multiplexing from sensors that ensures the efficient bandwidth utilization. In other words, given that every sensor is associated with one of the clusters, the cluster formation result minimizes the number of clusters in the network while maximizing the average cluster size. This problem is related to the minimum dominating set problem in graph theory, a NP-complete problem. For the centralized cluster formation process used in the network with hierarchical structure, the SG runs three heuristic cluster formation algorithms with global sensor information to derive a refined cluster set. The complexity and overhead of such process is O(3N) where N is the number of sensors covered by the SG. For the distributed cluster formation process used in the network with flat structure, the SG uses limited local sensor information to derive a cluster set. Consequently, the clustering result of the centralized process is more efficient than that of the distributed process with the control overhead trade-off.

In the cluster scheduling phase, after every sensor joins one of the derived clusters in the network, the SG setups a communication schedule for all clusters. The scheduling method is application-dependent. With the wireless sensor application delivering periodical traffic to a SG, the static scheduling method is used. In other words, the SG assigns a fixed transmission schedule to clusters and the length of transmission schedule is proportional to the cluster size. With the wireless sensor application introducing non-periodical/ dynamic traffic to a SG, the static scheduling method is inadequate because it lacks robustness to adapt to the traffic. The result is worse bandwidth efficiency and longer packet delay.

In order to improve the bandwidth efficiency and reduce packet delay, an adaptive cluster-scheduling method is used which uses the noise behaviour analysis link quality evaluation described above.

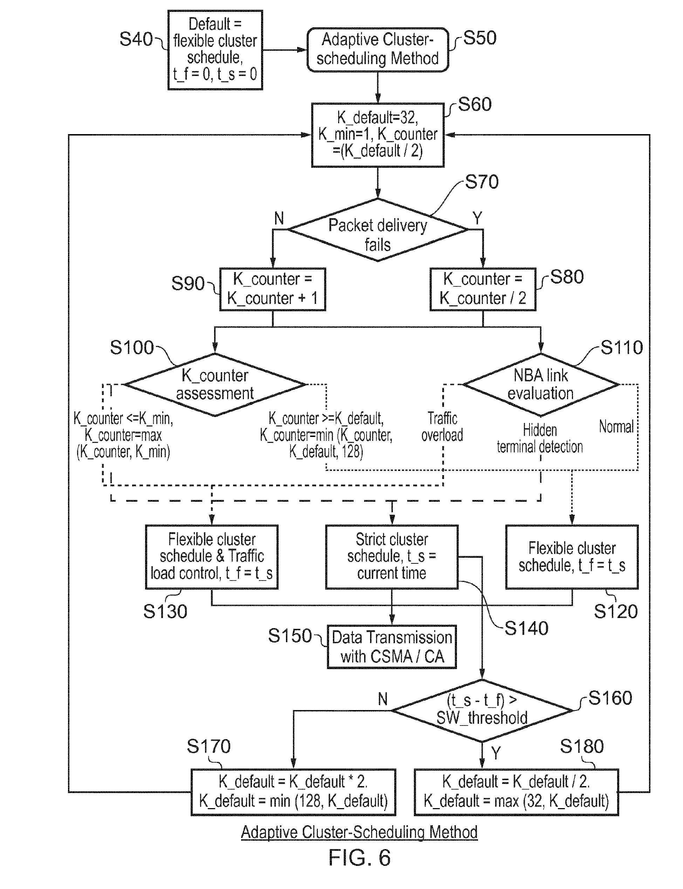

Figure 6 illustrates the procedure in more detail. In overview, a sensor gateway causes adaptive switching between the flexible cluster arrangement (where communication scheduling is shared by multiple clusters) and the strict cluster scheduling arrangement (which provides for non-overlapping communication scheduling so that different clusters are scheduled to communicate using different resources such as, for example, at different times). The sensor gateway, by default, tries to keep the network nodes or sensors operating according to a flexible cluster arrangement to keep a high frame-multiplexing state and only switches to the strict cluster arrangement and provide a low frame-multiplexing state if the link quality based on the noise behaviour analysis evaluation shows that the condition of the transmission channel is unacceptable. Such an approach attempts to increase the frame-multiplexing of sensors whilst taking into account the transmission efficiency. The switching between cluster arrangements is based on the physical layer information which is derived from the channel's energy measurements during the noise behaviour analysis and the data packet reception in the link layer predicting the level of channel contention at the sensor gateway. The packet reception in the link layer is considered because the finding of the latest data traffic condition alleviates the Ping-Pong effect from scheduling switching. The ping-pong effect is an important problem in dynamic decision situations, like hand-off of mobile phones, location management strategy in a cellular network, etc., and it can cause unnecessary resource wasting and performance degradation due to inefficient switching decisions. This problem is mitigated using a K Nearest Neighbour search algorithm KNN (K_{default}, Kₘₐₓ, Kₘᵢₙ) with a sliding K_{default} parameter. As can be seen in Figure 6, with each successful packet delivery, the K_counter is linearly increased; otherwise the K_counter is exponentially decreased. This enables a node to promptly capture any transmission performance degradation. In conjunction with that, it is possible to dynamically tune the K_default parameter according to the frequency of schedule switching, reducing the Ping-Pong effect in an adaptive manner. Here, the t_s and t_f parameters are time stamped for the different scheduling methods.

Accordingly, at step S40, the sensor gateway initializes the network using a flexible cluster schedule, where all sensors within the range of the sensor gateway form a single cluster and any sensor within that cluster may opportunistically perform transmissions in accordance with the normal contention-based protocol.

Thereafter, processing proceeds through steps S50, S60 to S70, where an assessment is made of whether packet deliveries are occurring.

If packet delivery does fail then the K_counter is decreased at step S80.

If packets are being delivered then K_counter is increased at step S90.

At step S100, an assessment is made of the K_counter.

At step S110, the output from the noise behaviour analysis link evaluation is provided.

If the K_counter assessment indicates that packets are being delivered and the noise behaviour analysis link evaluation indicates that the channel state is normal, then the flexible clustering arrangement is maintained at step S120.

If the K_counter assessment indicates that packets are not being delivered and the noise behaviour analysis link evaluation indicates that a traffic overload condition is occurring, then at step S130 the flexible cluster scheduling is maintained but sensors are instructed to reduce their traffic.

If the K_counter assessment indicates that packets are failing to be delivered and the noise behaviour analysis link evaluation indicates that the hidden terminal condition is occurring, then at step S140, sensors within the coverage area of the sensor gateway are reconfigured into a strict cluster arrangement. As mentioned above, such a strict cluster arrangement is one where every sensor is formed into a cluster where it can receive transmissions from every other sensor within that cluster. That is to say, each cluster is formed of one-hop neighbours. The sensor gateway can determine the configuration of the clusters and the members of each cluster based on neighbour lists generated by each sensor. Each cluster is then configured to transmit using separate resources. For example, in a time division multiplexed arrangement, each cluster will be allocated a different time interval within which it may perform transmissions. This arrangement ensures that collisions due to hidden terminals cannot occur since every sensor within the cluster is able to sense transmissions of other sensors within the cluster.

Once the cluster arrangements have been set, then data transmission occurs at step S150.

Thereafter, processing returns to step S60.

If a strict cluster configuration has been instructed, then at steps S160 to S180 the value of K_default is adjusted according to the frequency of reconfigurations in order to reduce the ping-pong effect of switching between a strict and flexible clustering arrangement.

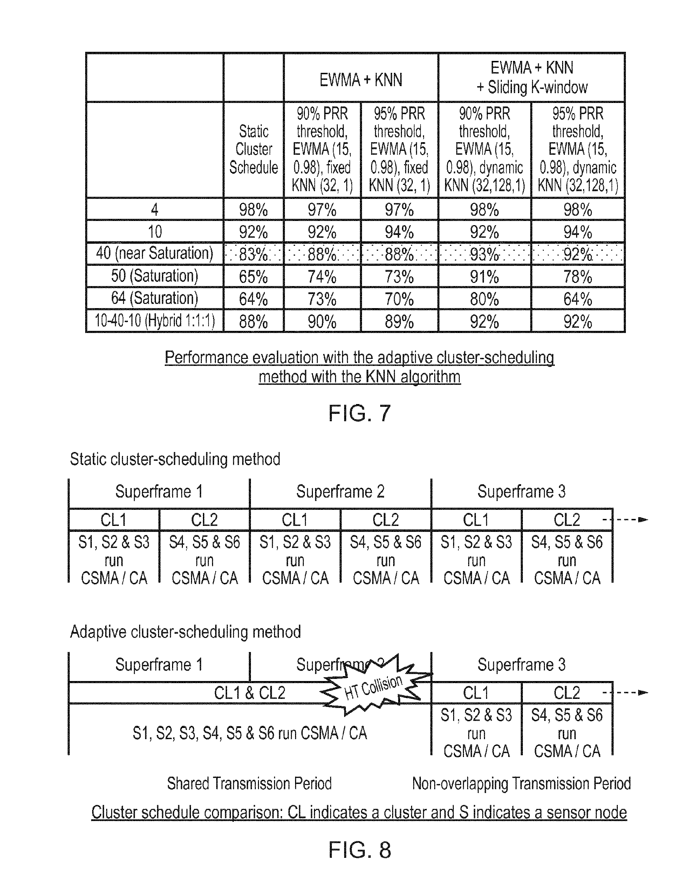

To demonstrate feasibility of the adaptive cluster-scheduling method based on the KNN algorithms, this approach was implemented on a test-bed and compared the transmission efficiency between the static cluster-scheduling method and the adaptive cluster-scheduling method. As can be seen in Figure 7, with different traffic conditions and KNN configurations, there is a performance improvement up to 25 %.

After the cluster schedule is derived, sensors with pending packets follow the schedule to set up the data delivery with the CSMA/ CA method. Figure 8 shows the comparison between the static cluster-scheduling method and the adaptive cluster-scheduling method, given a wireless sensor network with two three-node clusters hidden from each other. That shows the trade-off between time-multiplexing of sensors and transmission reliability with scheduling access.

The adaptive cluster-scheduling method has no impact on the IEEE 802.15.4 standard's configuration and message flows, for example, it adopts the existing beacon method and contention access structure to enable the schedule adjustment and data delivery. A downside of this approach is the additional control overhead cost that depends on the frequency of schedule switches.

Hence, it can be seen that the adaptive cluster-scheduling method with the noise behaviour analysis link quality evaluation of embodiments adopts cluster formation and adaptive scheduling coordination techniques to improve the transmission performance and bandwidth efficiency compared to previous approaches and the IEEE 802.15.4 standard. Overall, it introduces the following:
1. With the hybrid channel access method, the cluster set is set up in a way that optimizes the frame-multiplexing of sensor and minimize the hidden terminal problem. The resulted clusters are disjoint and their communication schedule is set to be non-overlapping in the super-frame structure (see Figure 8). Embodiments provide an adaptive alternative, which dynamically adjusts an overlapping cluster schedule for the sensors from multiple clusters, and hence the sensors can transmit and/or receive in a long communication period. That enables the sensors with more communication resources (bandwidth), reducing the restriction as to when they can transmit or receive data. In this scenario, clustering techniques similar to those previously proposed can be used. The difference occurs after the definition of each cluster, namely, the SG performs the link quality evaluation to manage the scheduling access among clusters if necessary.
2. In the adaptive cluster-scheduling process, the noise behaviour analysis link quality evaluation technique swiftly and accurately captures temporal dynamics of a wireless channel and facilitates the SG to decide the switches between cluster schedules. The noise behaviour analysis method is based on the energy characteristics of radio channel to estimate a link quality and it is different from other existing solutions. Besides, it distinguishes the causes of packet loss in a contention-based wireless network that help the network in terms of data re-transmission, channel access management, resource conservation, etc.
3. The KNN algorithm with the link layer information is used to address the ping-pong effect and the quick performance degradation problem. The previous link layer estimation methods for a link quality do not consider the ping-pong effect since it is an integration issue in system level.

A series of studies have been performed to develop and validate the proposed ideas and to show their potential benefits as follows:
1. The effectiveness of the noise behaviour analysis is proven - energy characterization of a radio channel that reflects important wireless channel conditions, e.g., traffic overload, hidden terminal problem, etc.
2. The transmission performance is validated with the various adaptive algorithms based on the KNN approach and demonstrates the improvement in the transmission performance.
3. In the adaptive scheduling coordination, this scheduling method efficiently handles the dynamic traffic pattern, and it is highly compatible with the IEEE 802.15.4 standard.
4. Embodiments introduce small control message overhead and the low protocol complexity and provide adaptive access control for every sensor node.

Figure 8 illustrates an application scenario according to an embodiment. A stationary Wireless Sensor Network (WSN), running a single-hop star topology is illustrated. All sensors must directly report their sensed data to a sensor gateway (SG). WSN applications, e.g., grid monitoring, event detection, etc., usually use such network configuration. With the improved receiver design at SG, increasing the communication range between the sensors and the SG, more IEEE 802.15.4 sensor nodes are included in this WSN. In this case, the asymmetric distance between a sensor's communication range and its carrier sensing range is created. That considerably increases the hidden terminal problem in the network since a sensor node has more network coverage where it cannot perform the carrier sensing. It is estimated that the transmission probability of hidden nodes increases from 40% to 90% when the new antenna design triples a sensor node's communication range, given the uniform traffic generation in the network. Embodiments alleviate these difficulties with the unpredictable/ dynamic traffic model. In particular, embodiments alleviate the hidden terminal problem in a WSN while maintaining the efficient bandwidth efficiency using the adaptive cluster-scheduling method with the NBA link estimation. The communication complexity and overhead is small. In addition, this approach easily integrates into the CSMA/ CA solutions, such as the IEEE 802.15.4 standard.

### Deployment in a Mesh Network Arrangement

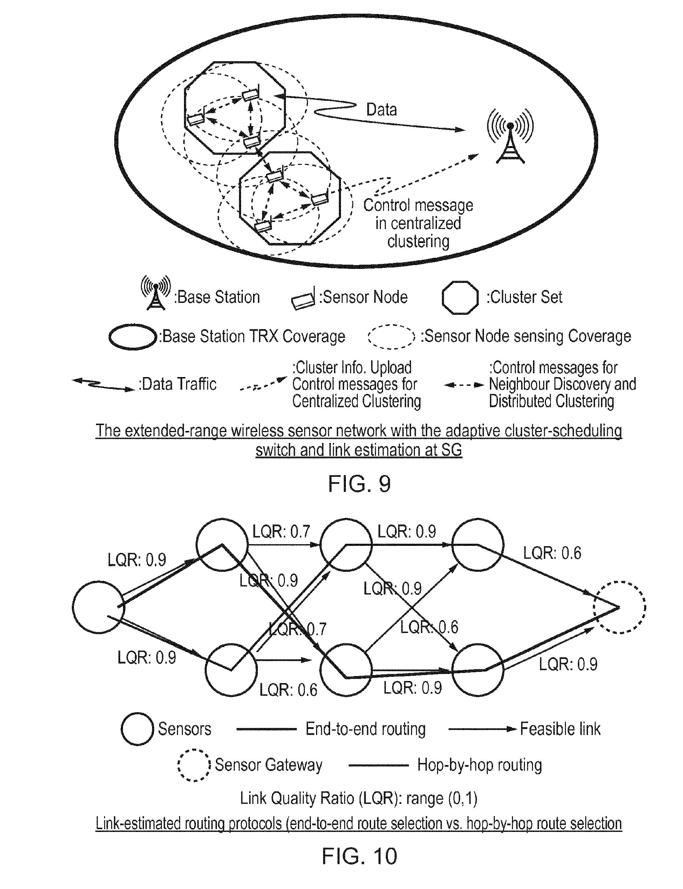

Other embodiments that can benefit by this invention are those experiencing wireless communication problems involving an estimation of link quality, e.g., link-aware routing in wireless networks, QoS-enabled data delivery, etc. Figure 10 shows hop-by-hop routing with link estimation and end-to-end path selection with overall links estimation.

Embodiments increase the flexibility of a scheduling access method, improving the frame-multiplexing of sensors, meanwhile, reducing the hidden terminal problem when sensor nodes and their SG are set to communicate directly. Embodiments extend the hybrid channel access protocol so the enhanced protocol runs ad hoc resource management in control phase and hybrid communication with CSMA/ CA and scheduling access in data delivery. Advantages of this approach are six-fold.
1. The adaptive switch between different cluster schedules depends on channel contention, so improving the transmission reliability and bandwidth efficiency of the WSN. The adaptive decision, based on the physical channel characteristics and the link layer packet reception, drives an ad hoc and efficient solution for the targeted problems, compared with other approaches.
2. The noise behaviour analysis link estimation method adopts a method to identify channel contention problems in contention-based wireless networks. Compared with previous approaches, it introduces no packet probe (saving overhead cost), uses a shorter sample duration than the packet reception rate, causes smaller variations than the link quality indicator, provides higher accuracy than the RSSI, depends less on the reception of data packets, and distinguishes the causes ofpacket loss in wireless networks, consequently enhancing the transmission efficiency of the network. Its foundation is based on the measured characteristics of channel energy's change to predict a link quality. In the noise behaviour analysis process, the channel characterization is proved to be effective for identifying the channel contention problems from hidden node's transmission and traffic overload. The calibration process ensures the measured results with high fidelity. The adoption of the EWMA filter technique to derive the latest link quality prediction is punctual and resource-efficient.
3. The dynamic KNN algorithm to manage the switch of cluster schedules is adopted, minimizing the ping-pong effect during the switch. This problem is not considered in previous link quality estimation approaches but it will impact the transmission performance of the extend-range WSN with the hybrid channel access and the adaptive cluster-scheduling method.
4. The scheduling coordination for derived clusters reduces inter-cluster co-channel interference, i.e., hidden terminals in best effort, while the CSMA/CA technique is used to manage intra-cluster co-channel interference. The idea of integrating the CSMA/ CA with the adaptive scheduling process is pragmatic for the hierarchical network. The scheduling solution is tuneable to different traffic models (static method vs. adaptive method) and to different traffic conditions (fair channel contention vs. high channel contention) and conveniently integrates into the IEEE 802.15.4 standard. In addition, the adaptive scheduling method improves the bandwidth utilization, flexibly and swiftly scheduling the data communication between a sensor node and a SG with the CSMA/ CA method.
5. In addition to the mitigation of the hidden terminal problem, the adaptive cluster-scheduling configuration with the noise behaviour analysis in a WSN provides benefits at the routing and application levels. The clustering technique benefits the efficiency of data aggregation and packet routing and the link estimation technique, like noise behaviour analysis, further enhances the routing results.
6. A comprehensive and adaptive communication mechanism for the extended-range WSN is provided. The design adapts to actual standard and maintains low complexity and low overhead.

Embodiments provide a reliable and adaptive communication mechanism for the extended-range WSN with the IEEE 802.15.4 standard with the dynamic traffic model. Embodiments minimize the hidden terminal problem and introduce less control messages overhead cost, compared to the IEEE 802.11 standard, because the RTS-CTS mechanism is not used. It does not require the two-radio implementation as the STEM and PAMAS protocols do, and it is more scalable and more compatible with current standards than the scheduling schemes, DTA, N-CSMA/CA, etc. In addition, it is different from existing link quality estimation methods and enables swift and efficient link quality prediction.

Embodiments could be implemented in a machine-2-machine access point module which could be added to a Home Service Gateway or a femto base station.

Some of the prior approaches mentioned above will now be described in more detail.

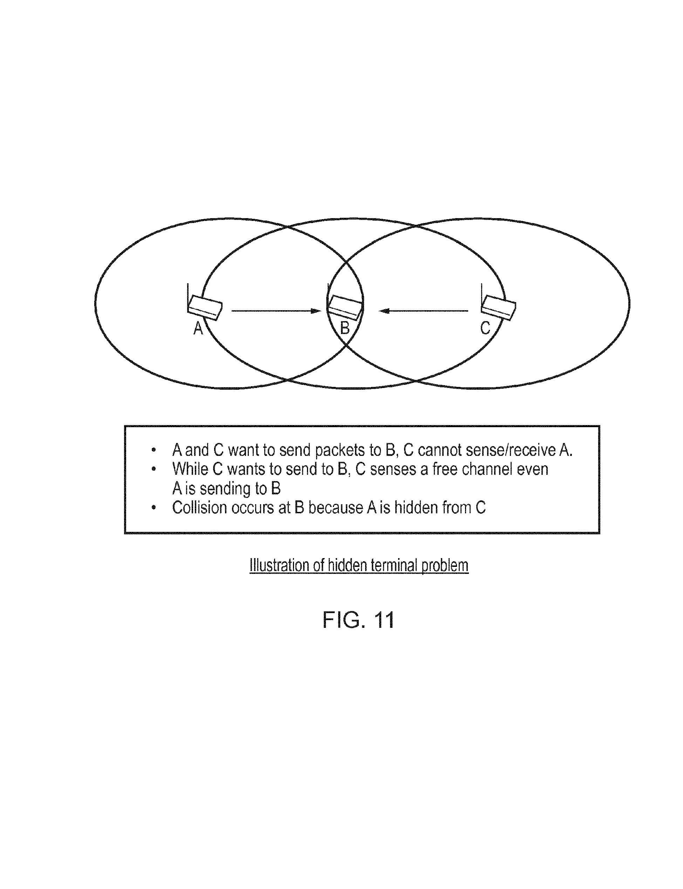

IEEE 802.15.4 1 is an IEEE standard that defines wireless Physical Layer (PHY) and Medium Access Control Layer (MAC) for low-Rate Wireless Personal Area Networks. The standard adopts the CSMA/ CA technique to manage channel access of wireless nodes, but it does not solve the hidden terminal problem (see Figure 11). In wireless networks, the hidden terminal problem occurs when two transmitting nodes with the same channel do not know existence of the other transmission, meanwhile, communicating with a common receiver. This leads to transmission failures in link layer (i.e., performance degradation). The IEEE 802.15.4 standard is inherently designed for low traffic rate scenarios so the standard does not consider the hidden terminal problem. As advancements in a sink node's antenna design and radio technology increase the communication range of wireless nodes and the proliferation of new sensor applications introduce more functional nodes into this wireless system, the degradation effect of the hidden terminal problem certainly needs to be considered.

The IEEE 802.11b Wi-Fi standard also faces the hidden terminal problem while adopting the CSMA/CA technology. It uses the exchanges of the control messages, e.g., Request To Send (RTS) and Clear To Send (CTS), to address such problem. While the control message allows wireless nodes to learn the existence of hidden nodes, it is expensive for Wireless Sensor Networks (WSN) in terms of the control message overhead and the energy consumption since sensor nodes are always energy-constrained, and their data packet size is usually smaller, compared to the Wi-Fi data packet, leading the high overhead cost ratio with the RTS-CTS mechanism.

Another approach to address the hidden terminal problem is the two-radio architecture, i.e., one data exchange channel and one signalling channel. Power Aware Multi-Access protocol with Signalling (PAMAS) and Sparse Topology and Energy Management protocol (STEM) both use this concept that allows the data channel to sleep until communication is required. The signalling channel control using the RTS-CTS exchanges or busy tones alleviates transmission collisions from hidden nodes. Such technology was proved to reduce the hidden terminal problem, but it requires the second set of radio components in a sensor node and consumes more energy. Scheduling-based channel access techniques, like Distributed Randomized TDMA Scheduling protocol (DRAND), Data Transmission Algebra (DTA) by and Grid-based Latin Square Scheduling Access protocol (GLASS), reduce the hidden terminal problem since they follow the two-hop graph colouring theory to avoid the hidden node situation. Shortcomings of these technologies include the increasing protocol complexity and control messages overhead in large scale networks or dynamic networks and the lack of robustness against unpredictable and dynamic traffic, causing bandwidth inefficiency.

The hybrid approach, i.e., N-CSMA/CA, combining contention access CSMA/CA with cluster-based scheduling access, minimizes the hidden terminal problem with the cluster-based coordination among sensors' communication (C-k Lin, T, Kokkinos, and F. Mullany, "Extended-range Wireless Sensor Networks with Enhanced IEEE 802.15.4 CSMA/ CA," Proc. IEEE Sensors Conf. , Limerick, 2011). This protocol is fitted well in wireless sensor networks with hierarchical structure. Its concern is the potential bandwidth inefficiency due to the static scheduling access and the dynamic traffic.

Embodiments provide a wireless link quality evaluation method that captures variations of a wireless link quality and identifies potential causes of the variations. In principle, the method examines the temporal relationship between interfering nodes and energy intensity of a channel. Next, it estimates the wireless link condition and, crucially, the corresponding reasons for its state. The results show that the average length of peak transmission periods increases when sensor communication is interfered by any hidden terminal's transmission. Such phenomenon reflects the overlapping transmission of different sensors. In addition, it is verified that the interval between peak transmissions statistically estimates the traffic intensity in channel. That allows a sensor gateway and sensors to control their traffic flows.

Previous wireless link quality estimation techniques are classified in two categories: software-based and hardware-based. In the software-based approach, link-layer statistics (Packet Reception Rate, Required Number of Packet transmission, etc.) were proposed to evaluate a wireless link. Their performance, in terms of the accuracy, cost, stability, and reactivity, depends on the sample size and/ or statistical techniques used in the wireless link prediction. The trade-off between stability/ accuracy and reactivity is well observed. In the hardware-based approach, PHY-layer information (Received Signal Strength Indicator, Signal to Noise Ratio, etc.) is directly read from a radio transceiver, but the capability in accurately characterizing a wireless link quality is a concern. Embodiments usually perform hardware calibration, data collection and analysis to predict a link quality. The difficulties arise from the fact wireless link quality degradation derives from a number of different mechanisms. With the existing techniques, one common limitation is the inability to identify the cause of a transmission failure. Embodiments address this gap and explore the transmission failure in contended access wireless networks. A receiver in embodiments can determine the cause of transmission failure between the hidden terminal problem and Clear Channel Assessment failure (traffic over-load). In addition, the reactivity and cost of the compared technologies are different. A measured sample in embodiments is the RF energy measurement in an order of ten symbols, and that for the packet reception rate or Received Signal Strength Indicator method is the received packet in an order of packet length (hundred symbols) and average packet interval. Statistically, the delay of our proposed method would be shorter than that of the packet reception rate or Received Signal Strength Indicator method given the same analytical model for a link quality prediction. Embodiments take into account the link layer feature (packet reception rate) in a way that it is used to refine the wireless link evaluation in a calibration step, rather than to act as a wireless link metric in itself. This combination improves the reactivity while maintaining the measurement accuracy via the packet reception rate-based calibration process. Overall, embodiments have distinctive advantages over the previous work (packet reception rate, Received Signal Strength Indicator, SNR, etc.). Combining the abovementioned advantages with the multi-access technique proposed above allows wireless nodes to perform the efficient channel access control.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method, comprising:
collating measured changes in energy levels received over a transmission channel of a wireless telecommunications network; and
determining a current condition of said transmission channel by establishing a conformance of said measured changes with expected changes in energy levels when operating under at least one condition.

2. The method of claim 1, wherein said expected changes in energy levels are defined by expected boundaries within which said energy levels received over said transmission channel are expected to remain when operating under a normal condition.

3. The method of claim 1 or 2, wherein said expected changes in energy levels are defined by an expected time interval boundary between transmissions over said transmission channel and said step of determining comprises:
determining that said transmission channel is operating under a congested condition when said measured changes indicate that transmissions occur at intervals which are within said expected time interval boundary between transmissions.

4. The method of any preceding claim, wherein said step of determining comprises:
determining that said transmission channel is operating under said congested condition when an average of said measured changes indicates that transmissions occur at intervals which are within said expected time interval boundary between transmissions.

5. The method of claim 4, wherein said congested condition has a congestion magnitude and said congestion magnitude increases as said intervals which are within said expected time interval boundary between transmissions decrease.

6. The method of any preceding claim, wherein said expected changes in energy levels are defined by an expected transmission time period for each transmission and said step of determining comprises:
determining that said transmission channel is operating under a hidden node collision condition when said measured changes indicate that transmissions occur for a transmission period which exceeds said expected transmission time period.

7. The method of claim 6, wherein said step of determining comprises:
determining that said transmission channel is operating under said hidden node collision condition when an average of said measured changes indicate that transmissions occur for a transmission period which exceeds said expected transmission time period.

8. The method of claim 6 or 7, wherein said hidden node collision condition has a collision magnitude and said collision magnitude increases as said transmission period increases.

9. The method of any preceding claim, comprising:
controlling clustering of network nodes of said wireless telecommunications network utilising said transmission channel based on said current condition.

10. The method of claim 9, wherein said step of controlling comprises:
forming a flexible cluster of said network nodes in which the traffic rate available to said network nodes is restricted to lower than a rate supportable by said transmission channel when it is determined that said transmission channel is operating under said traffic congested condition.

11. The method of claim 9 or 10, wherein said step of controlling comprises:
forming strict clusters of said network nodes when it is determined that said transmission channel is operating under said hidden node collision condition, said strict clusters being formed by causing allocation of each network node to at least one of a plurality of clusters of network nodes, each cluster of network nodes comprising only those network nodes which detect transmissions from every network node within that cluster and in which transmissions by network nodes within each of said plurality of clusters are scheduled to be performed using resources of a transmission separation scheme allocated to be shared by network nodes within that cluster of network nodes.

12. The method of any one of claims 9 to 11, wherein said step of controlling comprises:
forming a flexible cluster of said network nodes in which the traffic rate available to said network nodes is said rate supportable by said transmission channel when it is determined that said transmission channel is operating under said normal condition.

13. The method of any preceding claim, wherein said wireless telecommunications network comprises a mesh network and said method comprising:
controlling transmission of data between nodes of said mesh network based on said current condition.

14. A computer program product operable, when executed on a computer, to perform the method steps of any preceding claim.

15. A network node for a wireless telecommunications network, comprising:
collation logic operable to collate measured changes in energy levels received over a transmission channel of a wireless telecommunications network; and
determining logic operable to determine a current condition of said transmission channel by establishing a conformance of said measured changes with expected changes in energy levels when operating under at least one condition.
